# EUROPEAN PATENT APPLICATION

(11) **EP 3 861 864 A1**
(43) Date of publication of application: **11.08.2021**
(21) Application number: 19868480.5
(22) Date of filing: 04.10.2019
(51) Int. Cl.: A23L 5/00, A23P 20/20, A23P 30/00, B33Y 50/00

(54) **FOODSTUFF, FOODSTUFF MANUFACTURING DEVICE, FOODSTUFF MANUFACTURING METHOD, AND FOODSTUFF MANUFACTURING SYSTEM**

(30) Priority: 05.10.2018 JP 2018189977
(71) Applicant: DENTSU INC., Tokyo 105-7001 (JP)
(72) Inventor: SAKAKI, Ryosuke, Tokyo 105-7001 (JP)
(74) Representative: SSM Sandmair
(86) International application number: PCT/JP2019/039402
(87) International publication number: WO 2020/071556

(57) **Abstract**

To allow a reproduction to be easily formed while reproducing the texture of a certain food. The present invention relates to a new food (F) reproducing the texture of a certain food on the basis of texture data obtained by quantifying the texture of the certain food. The food is such that a mixture obtained by mixing a plurality of texture basic elements (57b) having different textures at a certain ratio is heated and/or cooled so as to reproduce a desired texture based on the texture data, and the mixture is formed so as to produce the food as a cubic object.

## Description

### Technical Field

The present invention relates to food, a food production apparatus, a food production method, and a food production system.

### Background Art

Three-dimensional shaping apparatus (so-called 3D printers) for producing three-dimensional objects on the basis of three-dimensional shape data have conventionally been proposed.

In recent years, attention has been focused on techniques in which such three-dimensional shaping apparatuses are applied to food production (see, for example, patent documents 1 and 2).

Patent document 1 describes a feature wherein a powder layer having a certain thickness is formed from a powdery food material, and a bonding inducing liquid is supplied to certain portions of the powder layer. By repeating this process a plurality of times, a bound body having a desired solid geometry is formed.

Patent document 2 describes a feature wherein a gelatinous food material having fluidity is discharged from, for example, a nozzle in a 3D printer so as to form a food having a certain three-dimensional shape.

### Prior Art Documents

### Patent Documents

Patent Document 1: Japanese Laid-open Patent Publication No. 2016-131507
Patent Document 2: Japanese Laid-open Patent Publication No. 2018-102261

### Summary of the Invention

### Problems to be Solved by the Invention

However, even with the techniques disclosed in the abovementioned documents, it is difficult to form a food appetizingly reproducing the texture of a certain food by using a three-dimensional shaping apparatus. Thus, further improvement has been required.

The present invention was created in view of such problems, and an object thereof is to provide a food, a food production apparatus, a food production method, and a food production system for allowing a reproduction to be easily formed while reproducing the texture of a certain food.

### Means for Solving Problems

A food in an aspect of the present invention is a new food reproducing a texture of a certain food on the basis of texture data obtained by quantifying the texture of the certain food, wherein a mixture obtained by mixing a plurality of texture basic elements having different textures at a certain ratio is heated and/or cooled so as to reproduce a desired texture based on the texture data, and the mixture is formed so as to produce the food as a cubic object.

A food production apparatus in an aspect of the invention produces a new food reproducing a texture of a certain food on the basis of texture data obtained by quantifying the texture of the certain food, the food production apparatus including a plurality of cartridges in which a plurality of texture basic elements having different textures are accommodated, a mixing means for mixing the texture basic elements sent from the cartridges at a certain ratio so as to generate a mixture, a texture reproduction means for reproducing a desired texture based on the texture data by heating and/or cooling the mixture, and a shape forming means for forming the mixture into a cubic shape.

A food production method in an aspect of the invention is a food production method for producing a new food reproducing a texture of a certain food on the basis of texture data obtained by quantifying the texture of the certain food, the food production method including a texture measurement step for measuring the texture of the certain food and obtaining texture data provided by quantifying the texture, a texture data conversion step for converting the texture data into texture reproduction data that is to be used to reproduce a desired texture by combining a plurality of texture basic elements having different textures and pertains to a composition ratio between the plurality of texture basic elements, a mixing step for acquiring a mixture obtained by mixing the plurality of texture basic elements having different textures at a certain ratio, a heating/cooling step for heating and/or cooling the mixture so as to reproduce a desired texture based on the texture data, and a shape forming step for forming the mixture so as to produce the food as a cubic object.

The food production method in an aspect of the invention is such that the shape forming step includes layering the mixture for each of food materials forming the certain food.

The food production method in an aspect of the invention is such that the mixing step includes further mixing an enzyme for adjusting the texture of the mixture.

The food production method in an aspect of the invention is such that the shape forming step includes layering the mixture within a certain die so as to form a cubic shape through forming.

A food production system in an aspect of the invention includes a texture measurement apparatus that measures a texture of a certain food and obtains texture data provided by quantifying the texture, a texture data conversion apparatus that converts the texture data into texture reproduction data that is to be used to reproduce a desired texture by combining a plurality of texture basic elements having different textures and pertains to a composition ratio between the plurality of texture basic elements, and a food production apparatus that mixes the plurality of texture basic elements at a certain ratio on the basis of the texture reproduction data so as to produce a new food reproducing the texture of the certain food, wherein the food production apparatus reproduces a desired texture based on the texture data by heating and/or cooling a mixture obtained by mixing the plurality of texture basic elements and forms the mixture into a cubic shape.

### Effect of the Invention

The present invention allows for production of a new food reproducing the texture of a certain food on the basis of texture data obtained by quantifying the texture of this certain food. In addition, foods are formed into cubic shapes, so that a new food reproducing the texture of a certain food can be easily provided without the need to form a complicated shape.

### Brief Description of the Drawings

FIG. 1 is a schematic diagram illustrating the outline of a food production system in accordance with embodiments;
FIG. 2 is block diagrams illustrating some functions of components depicted in FIG. 1;
FIG. 3 is a general view of a food production apparatus in accordance with embodiments;
FIG. 4 is a schematic diagram reproducing some functions of a food production apparatus depicted in FIG. 3;
FIG. 5 is a perspective view illustrating an example of a food in accordance with embodiments;
FIG. 6 is a perspective view illustrating another example of a food in accordance with embodiments;
FIG. 7 is a perspective view illustrating another example of a food in accordance with embodiments;
FIG. 8 is a perspective view illustrating another example of a food in accordance with embodiments; and
FIG. 9 is a perspective view illustrating another example of a food in accordance with embodiments.

### Description of Embodiments

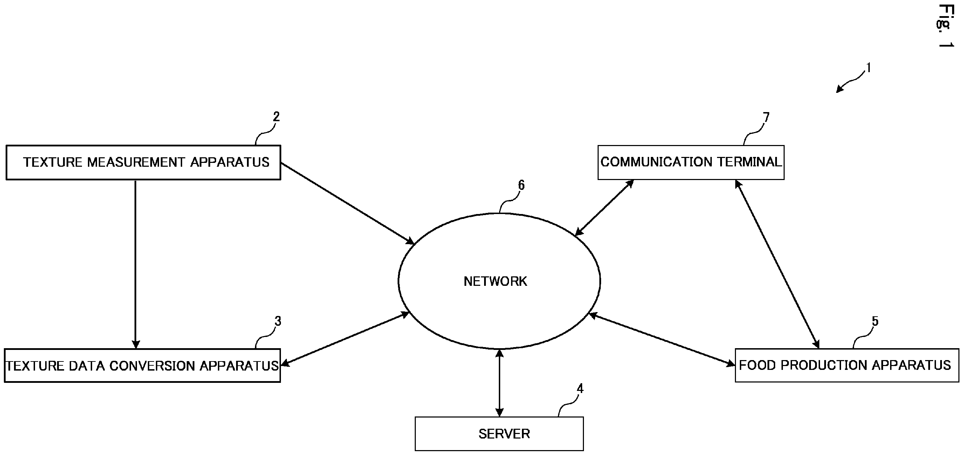

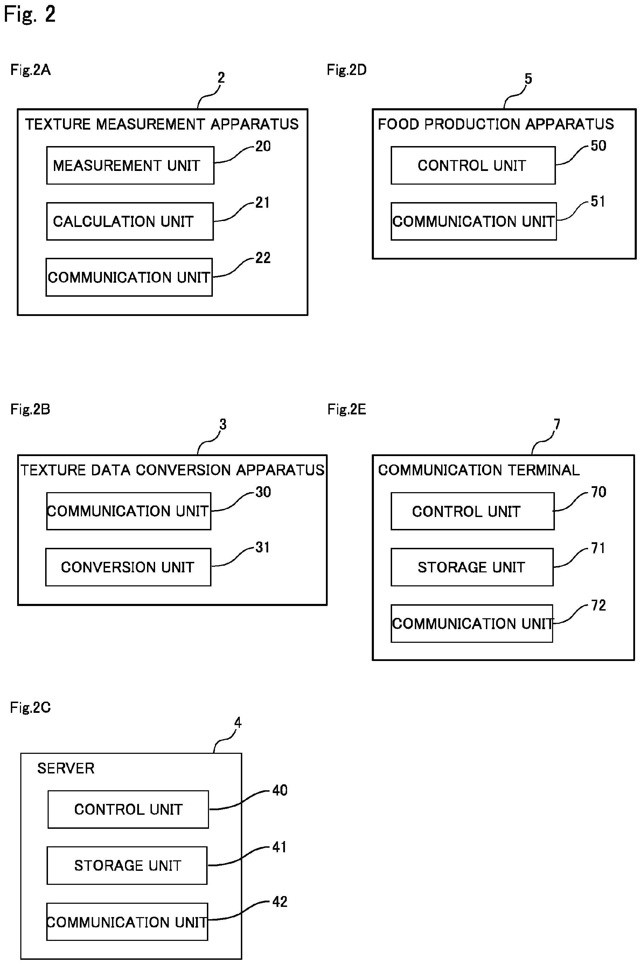

The following describes a food production system to which the present invention can be applied. FIG. 1 is a schematic diagram illustrating the outline of a food production system in accordance with embodiments. FIG. 2 is block diagrams illustrating some functions of components depicted in FIG. 1. The food production system described hereinafter is nothing but an example, and the invention is not limited to this and can have changes made thereto, as appropriate.

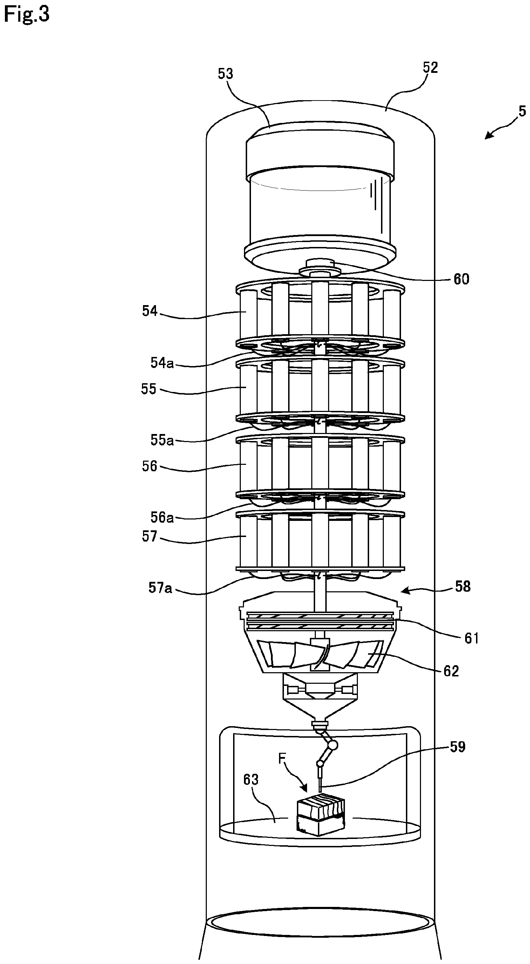

As indicated in FIGS. 1 and 2, a food production system 1 in accordance with embodiments is configured to measure the texture of a certain food and then produce a new food F (see FIG. 3) reproducing the texture of the certain food on the basis of texture data obtained by quantifying the measured texture.

In particular, the food production system 1 includes a texture measurement apparatus 2 that measures the texture of a certain food, a texture data conversion apparatus 3 that converts the texture of the certain food into texture reproduction data for reproducing the texture of the certain food, a server 4 that stores the texture reproduction data, a food production apparatus 5 that produces a new food F reproducing the texture of the certain food from the texture reproduction data, and a communication terminal 7 that is capable of communicating with the food production apparatus 5 over a network 6.

As depicted in FIG. 2, the above components each have a plurality of functional blocks associated with the food production in embodiments. The functional blocks are nothing but examples and are not limited to those described hereinafter, and other functional blocks may be provided, as appropriate and according to need.

In embodiments, foods include general things edible for persons, and may be edibles obtained through cooking or processing by, for example, heating a plurality of food materials (e.g., sushi, oden, hamburger, deep-fried pork cutlet on rice) or may be food materials alone, such as vegetables or fruits.

In embodiments, a texture is a feeling sensed when eating the food and indicates, in particular, the skin sensibility within the cavity of mouth including the teeth and the tongue. For example, examples of textures may include chewiness, feeling on the tongue, and feeling of food traveling down the throat.

The texture measurement apparatus 2 is configured to measure the texture of a certain food and obtain texture data provided by quantifying the texture. For example, a commercially available texture tester can be used for the texture measurement apparatus 2. In particular, as depicted in FIG. 2A, the texture measurement apparatus 2 includes a measurement unit 20 for measuring the texture of a certain food, a calculation unit 21 for obtaining (calculating) the measured texture as quantified texture data, and a communication unit 22 for outputting the texture data to the texture data conversion apparatus 3.

For example, the measurement unit 20 may be formed from a probe (not illustrated) provided with a pressure sensor. The measurement unit 20 measures the texture of a food with the leading end portion of the probe in contact with the surface of the food. The calculation unit 21 calculates the texture as quantified texture data (elasticity or hardness of the food) from electric output based on the pressure (load) on, or displacement of, the food surface measured by the probe. The communication unit 22 transmits the calculated texture data to the texture data conversion apparatus 3. The texture measurement apparatus 2 (communication unit 22) may be connected directly to the texture data conversion apparatus 3 (communication unit 30) in a wired manner or may be communicably connected thereto in a wireless manner over the network 6.

The texture data conversion apparatus 3 is formed from a computer that converts texture data transmitted from the texture measurement apparatus 2 into food reproduction data for food reproduction. In particular, as depicted in FIG. 2B, the texture data conversion apparatus 3 includes a communication unit 30 for communicating certain data with another apparatus and a conversion unit 31 for converting texture data into texture reproduction data.

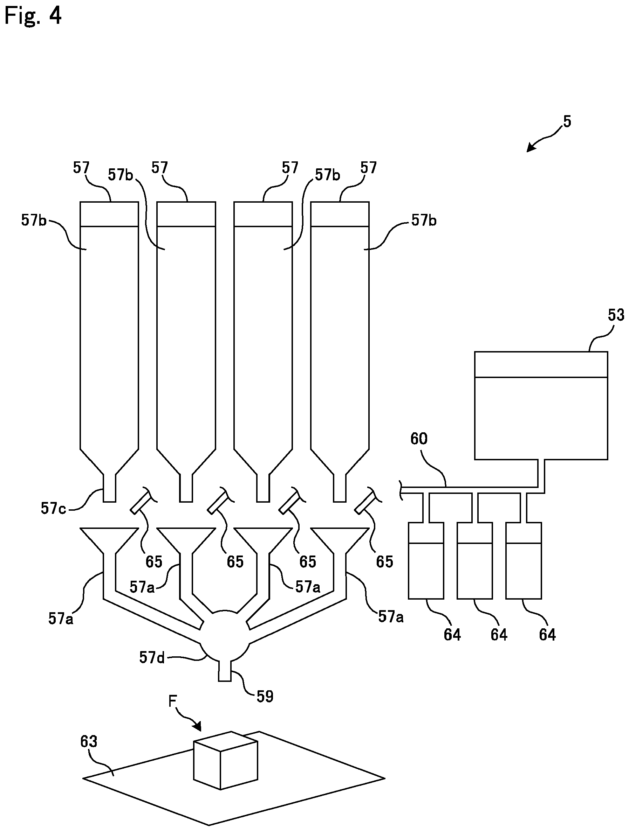

The communication unit 30 is configured to receive texture data from the texture measurement apparatus 2 and to be capable of communicating with another apparatus (e.g., server 4) over the network 6. The conversion unit 31 converts the received texture data into texture reproduction data pertaining to the composition ratio between a plurality of texture basic elements 57b (see FIG. 4) (descriptions will be given of the texture basic elements 57b hereinafter). Descriptions will be given of the texture reproduction data hereinafter. The texture reproduction data resulting from the conversion is transmitted to the server 4 over the network 6 and stored therein. The texture reproduction data may be stored in a storage medium such as a memory provided for the texture data conversion apparatus 3. In this case, the texture data conversion apparatus 3 will preferably be capable of being accessed from another apparatus over the network 6.

The server 4 is formed from a computer having a database function for accumulating texture reproduction data for each of a plurality of certain foods. The server 4 includes a processor for performing various processes, a memory, and the like. In particular, as depicted in FIG. 2C, the server 4 includes a control unit 40 for centralized-controlling operations of the entirety of the server 4, a storage unit 41 for storing texture reproduction data, and a communication unit 42 for communicating with another apparatus.

The storage unit 41 is formed from one or more storage media such as read only memories (ROMs) or random access memories (RAMs) in accordance with how the storage unit 41 is used, and stores texture reproduction data transmitted from the texture data conversion apparatus 3 for each of the certain foods. The communication unit 42 is configured to be capable of communicating with another apparatus (e.g., texture data conversion apparatus 3, communication terminal 7, food production apparatus 5) over the network 6.

The food production apparatus 5 is formed from a so-called 3D printer that downloads texture reproduction data from the server 4 and forms a new food F (see FIG. 3) reproducing the texture on the basis of the texture reproduction data. In particular, as depicted in FIG. 2D, the food production apparatus 5 includes a control unit 50 for centralized-controlling the entirety of the apparatus and a communication unit 51 for communicating with another apparatus .

The control unit 50 includes a processor for performing various processes, a memory, and the like. For example, the control unit 50 may convert texture reproduction data into data formatted to be capable of being output by the food production apparatus 5. The control unit 50 implements production of a new food F based on texture reproduction data by centralized-controlling various mechanisms described hereinafter. The communication unit 51 is configured to be capable of communicating with another apparatus (e.g., texture data conversion apparatus 3, server 4, communication unit 7) over the network 6. The specific structure of the food production apparatus 5 will be described hereinafter.

The communication terminal 7 is a computer capable of communicating with the server 4 and the food production apparatus 5 over the network 6. For example, a portable telephone or a tablet terminal may be used for the communication terminal 7. The communication terminal 7 includes a processor for performing various processes, a memory, and the like and is installed with software for controlling operations of the food production apparatus 5 . In particular, as depicted in FIG. 2E, the communication terminal 7 includes a control unit 70 for centralized-controlling the entire operation, a storage unit 71 for storing texture reproduction data and the above software, and a communication unit 72 for communicating with another apparatus.

The storage unit 71 is formed from one or more storage media such as read only memories (ROMs) or random access memories (RAMs) in accordance with how the storage unit 71 is used, and stores texture reproduction data downloaded from the server 4 and software for controlling operations of the food production apparatus 5. The communication unit 72 is configured to be capable of communicating with another apparatus (e.g., texture data conversion apparatus 3, sever 4, food production apparatus 5) over the network 6. The communication terminal 7 is not an essential component, and the server 4 or the food production apparatus 5 may have the functions of the communication terminal 7 (e.g., the software for controlling the food production apparatus 5).

The network 6 includes various networks such as the Internet, a mobile network, a local area network (LAN), and a wide area network (WAN).

The following describes a food production apparatus in accordance with embodiments by referring to FIGS. 3 and 4. FIG. 3 is a general view of the food production apparatus in accordance with embodiments. FIG. 4 is a schematic diagram reproducing some functions of the food production apparatus depicted in FIG. 3. The food production apparatus depicted in FIGS. 3 and 4 is nothing but an example, and the invention is not limited to this and can have changes made thereto, as appropriate.

First, descriptions are given of the outline of the entirety of the food production apparatus 5. As depicted in FIG. 3, the food production apparatus 5 includes a water tank 53, taste cartridges 54, nutrient cartridges 55, color cartridges 56, texture cartridges 57, a mixing means 58, and an output nozzle 59, which are arranged in the stated order from the upper side within a cylindrical housing 52 extending in a vertical direction.

The water tank 53 has the shape of a bottomed cylinder and has water stored inside thereof. A main pipe 60 extending downward is connected to a bottom portion of the water tank 53 and has a leading end portion (lower end portion) connected to the output nozzle 59 located at a lower position. An upper portion of the water tank 53 is equipped with a computer (not illustrated) forming the control unit 50 and the communication unit 51 depicted in FIG. 2D.

The plurality of taste cartridges 54, which extend in the vertical direction and are each formed from a cylindrical removable case, are located below the water tank 53 and arranged at certain angular intervals so as to surround the main pipe 60. The taste cartridges 54 each accommodate a taste basic element having a different taste. For example, the taste basic element may be formed from a liquid or powder having a certain viscosity. The number of taste cartridges 54, or the number of different taste basic elements, can be changed as appropriate. The taste basic elements include those for, for example, saltiness, sweetness, astringency, sourness, and umami as well as pungency and flavor, and a combination thereof allows for reproduction of the taste of a certain food.

Tubes 54a are connected to lower end portions of the taste cartridges 54 via dispensers (not illustrated) and have leading end portions connected to the main pipe 60 at the center. Upon the dispensers being controlled in accordance with a command from the control unit 50, the taste basic element within each of the taste cartridges 54 is discharged by a certain amount and sent to the main pipe 60 through the tube 54a.

The plurality of nutrient cartridges 55, which extend in the vertical direction and are each formed from a cylindrical removable case as with the taste cartridges 54, are located below the taste cartridges 54 and arranged at certain angular intervals so as to surround the main pipe 60. The nutrient cartridges 55 each accommodate a different nutrient. For example, the nutrient may be formed from a liquid or powder having a certain viscosity. The number of nutrient cartridges 55, or the number of different nutrients or the types thereof, can be changed as appropriate. By combining the nutrients, nutrient control can be implemented in accordance with the health condition of an individual.

Tubes 55a are connected to lower end portions of the nutrient cartridges 55 via dispensers (not illustrated) and have leading end portions connected to the main pipe 60 at the center. Upon the dispensers being controlled in accordance with a command from the control unit 50, the nutrient within each of the nutrient cartridges 55 is discharged by a certain amount and sent to the main pipe 60 through the tube 55a.

The plurality of color cartridges 56, which extend in the vertical direction and are each formed from a cylindrical removable case as with the nutrient cartridges 55, are located below the nutrient cartridges 55 and arranged at certain angular intervals so as to surround the main pipe 60. For example, the color cartridges 56 may each accommodate editable ink having a color basic element corresponding to cyan, magenta, yellow, black, or the like. The number of color cartridges 56, or the number of different color basic elements, can be changed as appropriate. Any color can be reproduced by combining the color basic elements (coloring matters).

Tubes 56a are connected to lower end portions of the color cartridges 56 via dispensers (not illustrated) and have leading end portions connected to the main pipe 60 at the center. Upon the dispensers being controlled in accordance with a command from the control unit 50, the editable ink within each of the color cartridges 56 is discharged by a certain amount and sent to the main pipe 60 through the tube 56a.

The plurality of texture cartridges 57, which extend in the vertical direction and are each formed from a cylindrical removable case as with the color cartridges 56, are located below the color cartridges 56 and arranged at certain angular intervals so as to surround the main pipe 60. The texture cartridges 57 each accommodate a different texture basic element. The number of texture cartridges 57, or the number of different texture basic elements, can be changed as appropriate. Note that descriptions will be given of the texture basic element hereinafter.

Tubes 57a are connected to lower end portions of the color cartridges 57 via dispensers (not illustrated) and have leading end portions connected to the main pipe 60 at the center. Upon the dispensers being controlled in accordance with a command from the control unit 50, the texture basic element within each of the texture cartridges 57 is discharged by a certain amount and sent to the main pipe 60 through the tube 57a.

The mixing means 58, which is linked to the main pipe 60, is disposed below the texture cartridges 57. The mixing means 58 is configured to acquire a mixture obtained by mixing the basic elements discharged from the above cartridges with water supplied through the main pipe 60. In particular, the mixing means 58 includes an agitation unit 61 that mixes and agitates the basic elements and water and a cooling fan 62 that cools a mixture thereof. In addition to generating a mixture, the mixing means 58 also has a function as a texture reproduction means for reproducing a desired texture based on texture data by heating and/or cooling the mixture, as will be described hereinafter in detail.

The agitation unit 61 generates a mixture by agitating the basic elements and water supplied through the main pipe 60 so as to uniformly disperse the basic elements and water. The agitation unit 61 has a function for performing a heating process for the mixture by means of hot water or the like. The method for the heating process is not particularly limited and can include, for example, irradiating the mixture with laser light. The cooling fan 62 is provided below the agitation unit 61 and cools a mixture agitated and heated by the agitation unit 61. As a result, a coagulated gelatinous mixture can be acquired.

The output nozzle 59 is connected to a lower portion of the mixing means 58. The output nozzle 59 includes an articulated robot arm and is configured to discharge, from the leading end portion thereof, a mixture sent via the mixing means 58. The output nozzle 59 constitutes a portion of a shape forming means for forming a mixture into a certain shape, as will be described hereinafter in detail.

A base 63 is disposed below the output nozzle 59. A new food F formed in a certain shape can be produced on the base 63 by discharging the mixture from the leading end portion of the output nozzle 59 and moving the output nozzle 59 on the basis of a command from the control unit 50.

In the meantime, with the recent technical innovation, attention has been focused on techniques in which three-dimensional shaping apparatuses for producing three-dimensional objects on the basis of three-dimensional shape data are applied to food production. For example, proposed techniques may pertain to the feature of forming a desired three-dimensional shape by discharging dough for cooked sweets from the leading end portion of a nozzle and the feature of reproducing complicated three-dimensional shapes, such as the shapes of candies shaped in figures, by means of a 3D printer.

However, such techniques are applied only to single food materials (dough for cooked sweets or candy with reference to the above examples) and can be said to involve replacing a resin or the like with a food material, for a material to be shaped by a typical three-dimensional shaping apparatus.

Thus, it is considered to be difficult to use the prior art in order to reproduce a cooked or processed edible (e.g., sushi, hamburger, curry and rice, ramen) or an edible containing a mixture of a plurality of different food materials by means of a three-dimensional shaping apparatus.

Accordingly, the inventor conceived of the present invention by focusing on acquisition of data on certain foods, in particular, texture, and further in consideration of a reproduction method for reproductions of certain foods, the shapes thereof, and the like. In embodiments, in particular, the texture of a certain food is measured in advance as quantified texture data (texture measurement step). The texture data is converted into texture reproduction data that is to be used to reproduce a desired texture by combining a plurality of texture basic elements having different textures and pertains to a composition ratio between the plurality of texture basic elements (texture data conversion step). Then, a mixture obtained by mixing the plurality of texture basic elements at a certain ratio is acquired (mixing step), and the mixture is heated and/or cooled so as to reproduce a desired texture based on the texture data (heating/cooling step) . The mixture is shaped so as to produce a food having a cubic shape (shape forming step).

In these configurations, texture data obtained by quantifying the texture of a certain food is converted into texture reproduction data, thereby allowing for production of a new food reproducing the texture of the certain food from a combination of a plurality of texture basic elements. In addition, foods are formed into cubic shapes, so that a new food reproducing the texture of a certain food can be easily provided without the need to form a complicated shape.

By referring to FIG. 4, the following describes the specific configuration of a food production apparatus, in particular the configuration for reproducing a texture. The food production apparatus depicted in FIG. 4 is configured mainly to reproduce a texture and has some differences from the food production apparatus illustrated in FIG. 3. However, the basic functions of the food production apparatus depicted in FIG. 4 are the same as those in FIG. 3. Accordingly, like components that have already described hereinabove are given like reference marks, and descriptions thereof are omitted herein, as appropriate.

As depicted in FIG. 4, a food production apparatus 5 includes a water tank 53, texture cartridges 57, and an output nozzle 59. Four texture cartridges 57 are provided and each accommodate a texture basic element 57b having a different texture. For example, the four texture basic elements 57b may be formed from a first element containing rice as a main material, a second element containing seaweed as a main material, a third element containing a bean as a main material, and a fourth element containing konjac as a main material. The texture basic elements 57b are not limited to these and can have changes made thereto or have other elements added thereto, as appropriate.

The lower end portion of each of the texture cartridges 57 forms a dispenser 57c and can discharge the texture basic element 57b by a certain amount from the dispenser 57c by being controlled by the control unit 50 (see FIG. 2). A tube 57a that includes an inlet having an enlarged diameter is disposed directly below each of the dispensers 57c. The tubes 57a are gathered together by a collection section 57d. An output nozzle 59 is connected to the collection section 57d.

Three enzyme cartridges 64 for adjusting the textures of a mixture are connected to middle portions of a main pipe 60 connected to the water tank 53. The enzyme cartridges 64 each accommodate an enzyme reproducing a different texture. For example, the enzymes may include a transglutaminase (TG) for reproducing the hardness of a food f, an α-glucosidase (AG) for reproducing the moist texture of the food F, and a protein-glutaminase (PG) for reproducing the smooth texture of the food F. The enzymes are not limited to these and can have changes made thereto or have other enzymes added thereto as appropriate.

The enzyme cartridges 64 are each connected to the main pipe 60 via a dispenser (not illustrated). Upon the dispensers being controlled by the control unit 50, certain amounts of enzymes are sent to the main pipe 60. Downstream end portions of the main pipe 60 are located directly above the inlets of the tubes 57a and form water fillers 65 for discharging water with certain amounts of enzymes mixed therewith.

Although not particularly illustrated, the tubes 57a and the output nozzle 59 have provided therebetween an agitation unit 61 (see FIG. 3) to serve as a mixing means for mixing texture basic elements 57b, water, and enzymes so as to generate a mixture, and an agitation unit 61 and a cooling fan 62 to serve as a texture reproduction means for reproducing a desired texture based on texture data by heating and/or cooling the mixture.

The following describes a food production method to which the food production system is applied. A food production method in accordance with embodiments is a method of producing a new food F reproducing the texture of a certain food on the basis of texture data obtained by quantifying the texture of the certain food and includes, in particular, a texture measurement step, a texture data conversion step, a mixing step, a heating/cooling step, and a shape forming step.

First, the texture measurement step is performed. In the texture measurement step, the texture of a certain food is measured, and texture data provided by quantifying the texture is obtained. In particular, the texture measurement apparatus 2 (see FIG. 1) brings the leading end portion of the probe into contact with the surface of the certain food and calculates texture data obtained by quantifying the texture from the pressure or displacement at that time. The texture data is transmitted directly to the texture data conversion apparatus 3 via a cable or transmitted indirectly thereto over the network 6 (see FIG. 1).

Next, the texture data conversion step is performed. In the texture data conversion step, the texture data conversion apparatus 3 converts the measured texture data into texture reproduction data pertaining to the composition ratio between a plurality of texture basic elements 57b (see FIG. 4), water, and enzymes. In addition, the texture data conversion apparatus 3 transmits the texture reproduction data resulting from the conversion to the server 4 via the network 6. The server 4 stores the texture reproduction data for each of the food materials (described hereinafter in detail) forming the certain food.

Next, the mixing step is performed. In the mixing step, a mixture provided by mixing the plurality of texture basic elements 57b, water, and the enzymes at a certain ratio on the basis of the texture reproduction data is obtained. In particular, the food production apparatus 5 downloads the texture reproduction data from the server 4 via the network 6 and controls the dispensers for the cartridges and the like on the basis of the texture reproduction data. The food production apparatus 5 mixes certain amounts of texture basic elements 57b supplied from the cartridges, the enzymes, and a certain amount of water supplied from the water tank 58 by means of the mixing means 58, thereby generating a mixture thereof.

Next, the heating/cooling step is performed. In the heating/cooling step, the mixture is heated and/or cooled so as to reproduce a desired texture based on the texture data. In particular, the mixing means 58 performs heat treatment for the mixture by heating the same by means of hot water or the like or by sending cool air thereto by means of the cooling fan 62, thereby reproducing a desired texture.

Next, the shape forming step is performed. In the shape forming step, the mixture is shaped so as to produce a food F having a cubic shape. In particular, the food production apparatus 5 plots the mixture from the output nozzle 59 on the base 63. Various methods can be used to plot the mixture. For example, the food production apparatus 5 can plot a gelatinous mixture into patterns of points or lines forming a quadrangle object having a certain thickness when seen in a plan view, and repeat this process a plurality of times so as to form a cubic layered body having a plurality of layers through forming. Alternatively, a die shaped like a square tube may be prepared in advance on the base 63, and a gelatinous mixture may be injected into the die up to a certain depth and cured to form a cubic shape. The plotting method is changed, as appropriate, in accordance with the data structure of a certain food to be reproduced, so that for any type of certain food, a new food F reproducing the texture thereof can be formed into a cubic shape.

The mixing step, the heating/cooling step, and the shape forming step do not necessarily need to be performed in this order, and these steps may be concurrently performed in a processing series or may be performed in a changed order. For example, after being formed into a cubic shape, the mixture may be cured by performing heating/cooling. In this case, the heating/cooling step functions as a portion of the shape forming step.

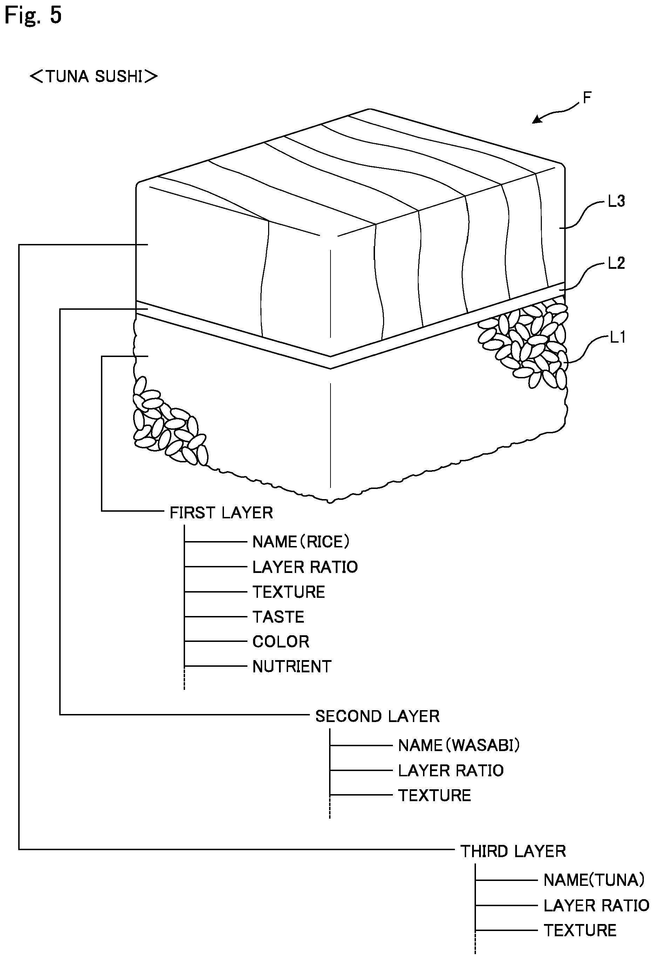

By referring to FIGS. 5-9, the following describes the configurations and the data structures of foods F provided as food reproductions in accordance with embodiments. FIGS. 5-9 are perspective views illustrating examples of foods in accordance with embodiments. The foods described in the following are nothing but examples, and the invention is not limited to these and can have changes made thereto, as appropriate, in accordance with a certain food that needs to be reproduced.

FIG. 5 depicts an example representing a food reproducing tuna sushi as a certain food by means of a cubic layered structure. As depicted in FIG. 5, for example, the food F may have a cubic shape having edges with a length of 3 cm and is formed from a layered body that includes a first layer L1, a second layer L2, and a third layer L3 that are arranged in this order from the lower side. For the food F formed like this, various parameters are set for each of the layers of the food F as food reproduction data to be stored in the server 4.

In particular, a name, a layer ratio, a texture, a taste, a color, a nutrient, and the like are set for each of the layers. A "name" indicates an identification mark of a layer, and in FIG. 5, the first layer L1 is defined as "rice," the second layer L2 is defined as "wasabi," and the third layer L3 is defined as "tuna." A "layer ratio" indicates the proportion of the thickness of a layer to the thickness (height) of the entirety of the cube and defined by a certain value. A "texture" indicates the texture reproduction data and is defined by a value pertaining to the composition ratio between a plurality of texture basic elements, water, and enzymes. A "taste" indicates taste reproduction data and is defined by a value pertaining to the composition ratio between a plurality of taste basic elements. Taste reproduction data can be calculated according to measurement performed in advance by a taste measurement apparatus (not illustrated). A "color" indicates color reproduction data and is defined by a value pertaining to the composition ratio between the basic elements of a plurality of colors. Color reproduction data can be obtained in advance using a 3D scanner (not illustrated) or the like. A "nutrient" is defined by a value pertaining to the composition ratio between a plurality of nutrients, and the ratio can be set, as appropriate, in accordance with the health condition of an individual who is to eat a food F.

Food reproduction data for a certain food having layers each having parameters set therefor as described above is stored in advance in the server 4, so that the food production apparatus 5 can easily output a reproduction of the certain food on the basis of the food reproduction data.

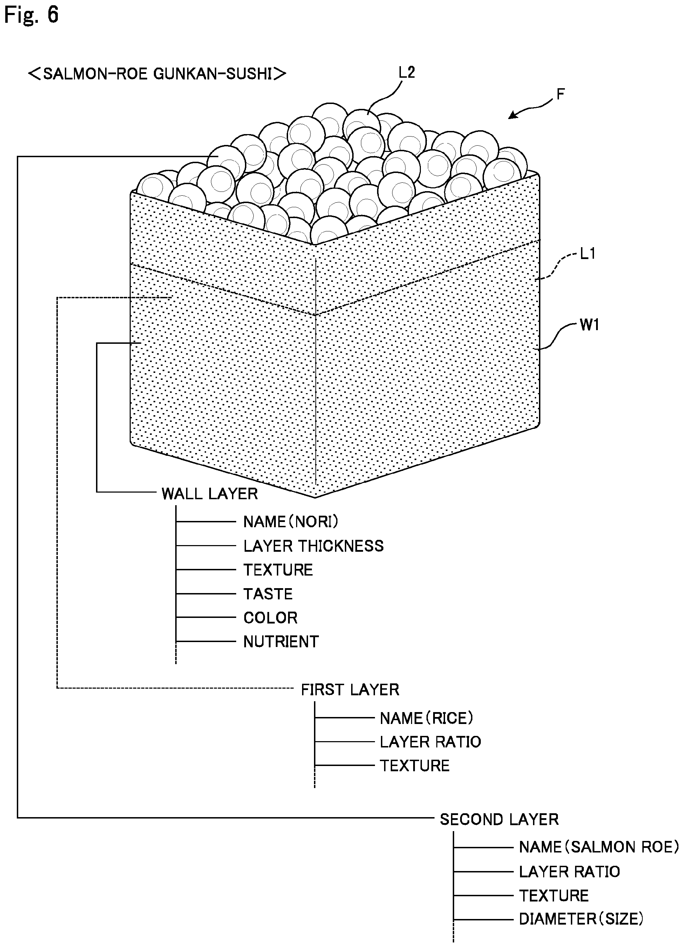

FIG. 6 depicts an example representing a food reproducing salmon-roe gunkan-sushi as a certain food by means of a cubic layered structure. As depicted in FIG. 6, a food F is formed by layering a first layer L1 and a second layer L2 in this order from the lower side inside a wall layer W1 shaped like a square tube. The food reproduction data set in FIG. 6 is essentially the same as that in FIG. 5 but is partially different therefrom in terms of the wall layer W1, which is formed from "nori," and the second layer W2, which is formed from "salmon roe."

The wall layer W1 is formed from a wall of nori shaped like a square tube, and a layer thickness, instead of a layer ratio, is defined as a parameter for the wall layer W1. The layer thickness is not a thickness in the height direction of the cube but indicates a so-called wall thickness. The "salmon roe" defined for the second layer L2 includes spherical bodies, and accordingly, the "diameter (size)" thereof is defined as a parameter. In the example depicted in FIG. 6, nori, which is relatively hard in texture, is initially formed as the wall for the cube, so that the wall of nori (wall layer W1) can be used as a die, thereby allowing rice and salmon roe to be easily plotted inside the wall. Accordingly, the shape maintaining property of the food F can be kept by the wall layer W1.

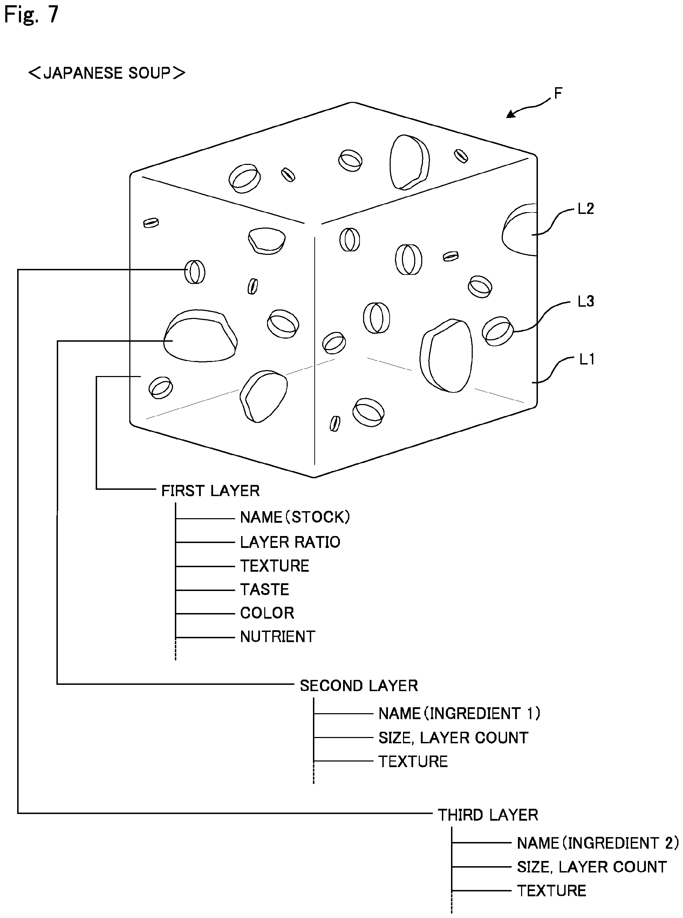

FIG. 7 depicts an example representing a food reproducing a Japanese soup as a certain food by means of a cubic layered structure. As depicted in FIG. 7, a food F is formed from a first layer L1 formed from a "stock" in a cubic shape in which second layers L2 formed from an "ingredient 1 (e.g., malt)" and third layers L3 formed from an "ingredient 2 (e.g., leek)" are scattered. In FIG. 7, since the "stock" for the certain food would be a liquid and thus would not have a shape maintaining property, a material having a certain hardness, such as agar, is used for the reproduction of the certain food. Although the parameters defining the layers are essentially similar to those in FIG. 5, the second layer L2 forming the "ingredient 1" and the third layer L3 forming the "ingredient 2" may have sizes or layer counts, instead of a layer ratio, defined therefor.

The food F formed like this is considered to be such that when forming the layered structure while curing the first layer L1, the second layer L2 and the third layer L3 can be plotted in a timely manner. In this way, the "ingredient 1" and the ingredient 2" can be scattered within the "stock" for the food F in the completed state.

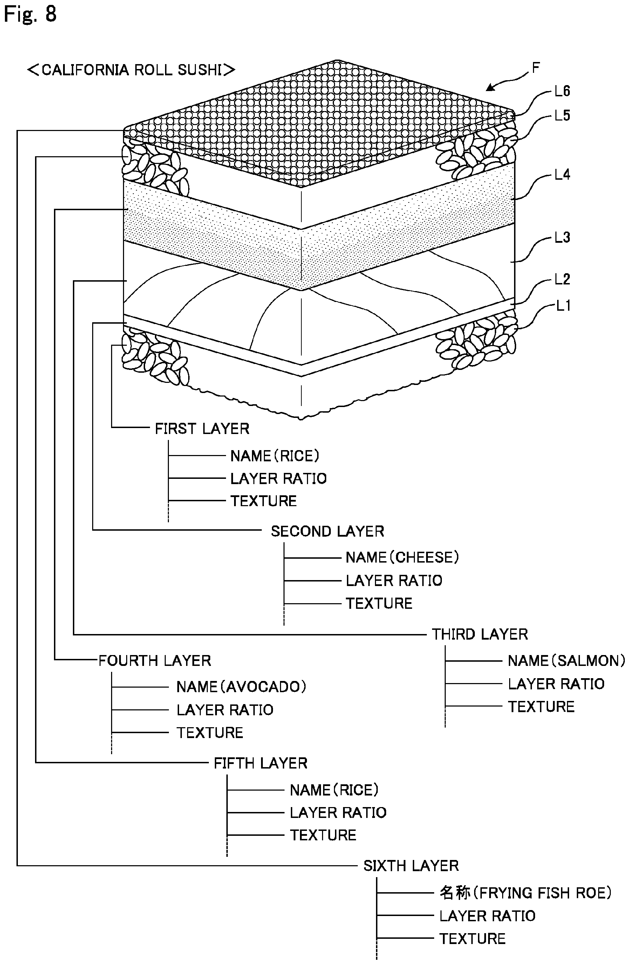

FIG. 8 depicts an example representing a food reproducing California roll sushi as a certain food by means of a cubic layered structure. As depicted in FIG. 8, a food F is formed from a cubic layered body that includes six layers: a first layer L1, a second layer L2, a third layer L3, a fourth layer L4, a fifth layer L5, and a sixth layer L6 that are arranged in this order from the lower side. "Names" serving as parameters for defining the layers are "rice" for the first layer L1, "cheese" for the second layer L2, "salmon" for the third layer L3, "avocado" for the fourth layer L4, "rice" for the fifth layer L5, and "frying fish roe" for the sixth layer L6. A layer is formed in this way for each of the food materials forming a certain food so as to form the shape of a reproduction (food F) as a layered body of these layers, thereby allowing any type of certain food to be reproduced as a new food F.

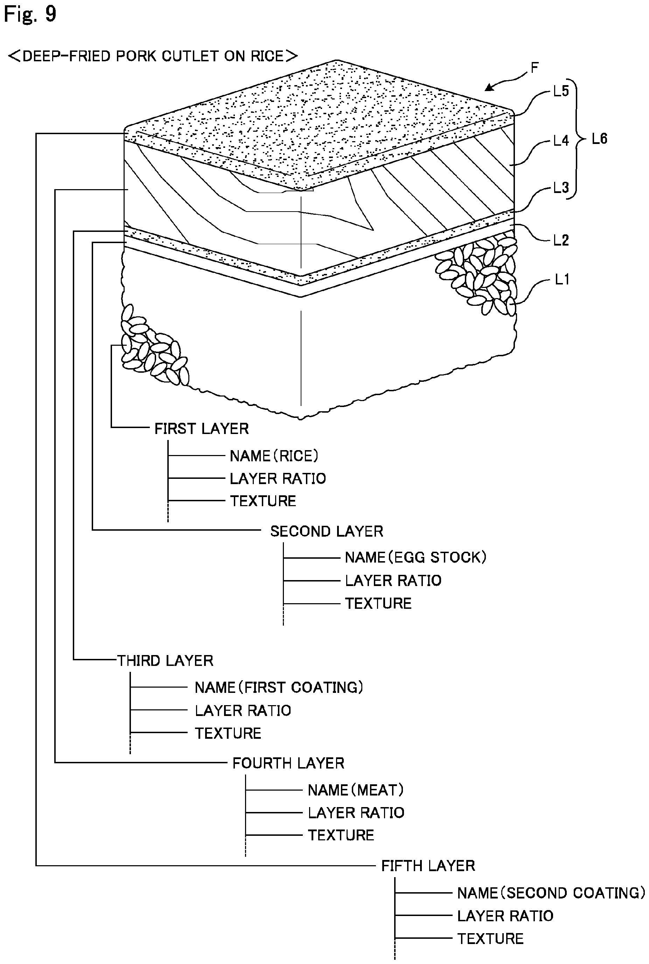

FIG. 9 depicts an example representing a food reproducing deep-fried pork cutlet on rice as a certain food by means of a cubic layered structure. As depicted in FIG. 9, a food F is formed from a cubic layered body that includes five layers: a first layer L1, a second layer L2, a third layer L3, a fourth layer L4, and a fifth layer L5 that are arranged in this order from the lower side. "Names" serving as parameters for defining the layers are "rice" for the first layer L1, "egg stock" for the second layer L2, "first coating" for the third layer L3, "meat" for the fourth layer L4, and "second coating" for the fifth layer L5. In the meantime, the third layer L3, the fourth layer L4, and the fifth layer L5 may be deemed as a single sixth layer L6 and defined together as "pork cutlet."

As described above, in accordance with the examples depicted in FIGS. 5-9, any type of certain food (e.g., processed food, cooked dish) can be recreated using a layered structure of food materials forming the food, thereby allowing any type of edibles to be reproduced using a layered structure irrespective of how many food materials are used therefor. Meanwhile, certain foods can each be represented as food reproduction data having a layered structure of the individual food materials of the food, so that food reproduction data can be managed under a unified standard. In addition, a food representation (new food F) is formed in a cubic shape, and hence a complicated configuration does not need to be provided, so that the output performance of the food production apparatus 5 can be enhanced. In embodiments, accordingly, a simplified shape can be provided for an edible that has a complicated three-dimensional shape, thereby allowing a reproduction of the certain food to be easily formed while reproducing the texture thereof.

In embodiments, as described above, any type of edibles can be recreated through reproduction using a simple cubic layered structure, so that a new food F can be provided in a form such as to develop customer interest in addition to reproducing the original texture of the food. Accordingly, the texture reproduction as the new food F in accordance with the present invention provides a new food concept as a food in a cubic shape.

Although the above embodiments have been described by referring to examples in which the food production apparatus 5 downloads food reproduction data from the server 4 so as to produce a food F, the invention is not limited to this. For example, an application operated on a communication terminal 7 of a user may be used to download food reproduction data from the server 4 over the network 6. Thus, irrespective of where the user is, a food F can be output from the food production apparatus 5.

In the above embodiments, the layered structures of the new foods F depicted in FIGS. 5-9 can be changed in terms of the order in which the layers are arranged or the layer ratios, or certain layers can be omitted from these structures. For example, the "wasabi" layer depicted in FIG. 5 (second layer L2) can be omitted from the food reproduction data downloaded on the communication terminal 7 by the user, or the order in which the "tuna" layer (third layer L3) and the "rice" layer (first layer L1) are layered can be reversed. Meanwhile, for convenience in production of the food F, the order in which the layers are layered may be changed such that these layers are layered in descending order of hardness in texture. When doing so, since the food material in the lowermost layer is stable, the shape maintaining property of the food F can be enhanced. Furthermore, an edible adhesive may be applied between the layers so as to enhance the adhesion therebetween.

Although the above embodiments have been described by referring to situations in which the plurality of tubes 57a located directly below the dispensers 57c of the texture cartridges 57 are gathered together by the collection section 57d and the output nozzle 59 is connected to the collection section 57c, the invention is not limited to this configuration. A plurality of output nozzles 59 may be provided for the respective texture cartridges 57. That is, one output nozzle may be connected to (disposed for) each one of the tubes 57a.

The above embodiments are preferably such that the cartridges (taste cartridges 54, nutrient cartridges 55, color cartridges 56, texture cartridges 57, enzyme cartridges 64) are provided independently of each other and are each configured to be capable of being attached to and detached from the apparatus. In addition to these cartridges, a plurality of "flavor cartridges" accommodating mutually independent, different flavor basic elements for reproducing the flavor of a food may be provided. When doing so, "flavor" is preferably set as a parameter of reproduction data for a cubic food. The parameter "flavor" is defined by a value pertaining to the composition ratio between the basic elements of flavors.

Embodiments and variations have been described, but other embodiments of the present invention may be implemented by entirely or partially combining the embodiments and variations described above.

Embodiments of the invention are not limited to the above-described embodiments, and various changes, replacements, or modifications may be made without departing from the gist of the technical idea of the invention. In addition, as long as the technical idea of the invention can be implemented in a different manner owing to technology progress or other derivative technologies, the invention may be implemented using such a method. Accordingly, the claims cover all embodiments that can fall within the scope of the technical idea of the invention.

### Industrial Applicability

The present invention has the effect of allowing a reproduction to be easily formed while reproducing the texture of a certain food and can be useful especially for food, a food production apparatus, a food production method, and a food production system.

The present application is based upon Japanese Patent Application No. 2018-189977, filed on October 5, 2018, the entire contents of which are incorporated herein.

## Claims

1. A new food reproducing a texture of a certain food on the basis of texture data obtained by quantifying the texture of the certain food, wherein
a mixture obtained by mixing a plurality of texture basic elements having different textures at a certain ratio is heated and/or cooled so as to reproduce a desired texture based on the texture data, and the mixture is formed into a cubic shape so as to produce the new food.

2. A food production apparatus for producing a new food reproducing a texture of a certain food on the basis of texture data obtained by quantifying the texture of the certain food, the food production apparatus comprising:
a plurality of cartridges in which a plurality of texture basic elements having different textures are accommodated;
a mixing means for mixing the texture basic elements sent from the cartridges at a certain ratio so as to generate a mixture;
a texture reproduction means for reproducing a desired texture based on the texture data by heating and/or cooling the mixture; and
a shape forming means for forming the mixture into a cubic shape.

3. A food production method for producing a new food reproducing a texture of a certain food on the basis of texture data obtained by quantifying the texture of the certain food, the food production method comprising:
a texture measurement step for measuring the texture of the certain food and obtaining texture data provided by quantifying the texture;
a texture data conversion step for converting the texture data into texture reproduction data that is to be used to reproduce a desired texture by combining a plurality of texture basic elements having different textures and pertains to a composition ratio between the plurality of texture basic elements;
a mixing step for acquiring a mixture obtained by mixing the plurality of texture basic elements at a certain ratio on the basis of the texture reproduction data;
a heating/cooling step for heating and/or cooling the mixture so as to reproduce a desired texture based on the texture data; and
a shape forming step for forming the mixture so as to produce the food as a cubic object.

4. The food production method of claim 3, wherein
the shape forming step includes layering the mixture for each of food materials forming the certain food.

5. The food production method of claim 3 or 4, wherein
the mixing step includes further mixing an enzyme for adjusting the texture of the mixture.

6. The food production method of any of claims 3-5, wherein
the shape forming step includes layering the mixture within a certain die so as to form a cubic shape through forming.

7. A food production system comprising:
a texture measurement apparatus that measures a texture of a certain food and obtains texture data provided by quantifying the texture;
a texture data conversion apparatus that converts the texture data into texture reproduction data that is to be used to reproduce a desired texture by combining a plurality of texture basic elements having different textures and pertains to a composition ratio between the plurality of texture basic elements; and
a food production apparatus that mixes the plurality of texture basic elements at a certain ratio on the basis of the texture reproduction data so as to produce a new food reproducing the texture of the certain food, wherein
the food production apparatus reproduces a desired texture based on the texture data by heating and/or cooling a mixture obtained by mixing the plurality of texture basic elements and forms the mixture into a cubic shape.
